# EUROPÄISCHE PATENTSCHRIFT

(11) **EP 2 826 722 B1**
(45) Veröffentlichungstag und Bekanntmachung des Hinweises auf die Patenterteilung: **29.06.2016**
(21) Anmeldenummer: 13177278.2
(22) Anmeldetag: 19.07.2013
(51) Int. Cl.: B65B 1/06, B65B 1/36, G01G 17/06, G01F 13/00

(54) **Handdosiergerät und Verfahren zum Dosieren von pulver- oder pastenförmigem Dosiergut**
Handheld dosing device and method for dosing powders or pastes
Appareil de dosage manuel et procédé de dosage pour des poudres ou des pâtes

(43) Veröffentlichungstag der Anmeldung: 21.01.2015
(73) Patentinhaber: Mettler-Toledo GmbH, 8606 Greifensee (CH)
(72) Erfinder: Zehnder, Marc, 8037 Zürich (CH); Nufer, Bruno, 8308 Illnau (CH); Zeiss, Siegfried, 8633 Wolfhausen (CH)

(56) Entgegenhaltungen:
- EP-A1- 1 930 702
- EP-B1- 1 959 244
- WO-A1-95/18365
- US-A1- 2008 302 835

## Beschreibung

Die vorliegende Erfindung betrifft ein Handdosiergerät zum Dosieren von fliessfähigen Substanzen, insbesondere von Pulvern und Pasten mit komplexen rheologischen Eigenschaften.

Dosiergeräte werden allgemein dazu verwendet, um genau abgemessene kleine Mengen von kritischen, z.B. toxischen Substanzen in ein Zielgefäss zu dosieren. Dabei ist das Zielgefäss häufig auf einer Waage platziert, womit das Gewicht der ausdosierten Substanz während des Dosiervorgangs überwacht und bei Erreichen eines vorgegebenen Sollgewichts die weitere Abgabe von Substanz in das Zielgefäss gestoppt werden kann.

Bekannte Geräte wie z.B. die in EP 1930702 A1 beschriebene Dosiervorrichtung sind als feststehende Geräte ausgelegt, welche im Betrieb auf einer Arbeitsfläche aufgestellt sind. Bei diesen feststehenden Dosiervorrichtungen lässt sich allgemein ein zweiteiliger Aufbau erkennen, d.h. einerseits eine Dosiereinheit und andrerseits eine Antriebseinheit. Die Dosiereinheit, welche einen Vorrat der zu dosierenden Substanz enthält, umfasst insbesondere einen Dosierkopf mit einer Austrittsöffnung und mit Organen zum Öffnen und Schliessen der Austrittsöffnung sowie gegebenenfalls zum Fördern und Auflockern des pulver- oder pastenförmigen Dosiergutes. Als weiterer Bestandteil der Dosiereinheit kann zur Erweiterung des Vorratsvolumens ein Entnahmegefäss mit dem Dosierkopf verbunden sein. Die Antriebseinheit in der Dosiervorrichtung von EP 1930702 A1 ist eine feststehende Basis- oder Ständereinheit, welche so ausgebildet ist, dass eine Dosiereineinheit in einfacher Weise eingesetzt sowie herausgenommen und gegen eine andere Dosiereinheit ausgetauscht werden kann.

Im Betriebszustand ist die Austrittsöffnung der eingesetzten Dosiereinheit nach unten gerichtet, und die Organe zum Öffnen und Schliessen der Austrittsöffnung sowie gegebenenfalls zum Fördern und Auflockern des pulver- oder pastenförmigen Dosiergutes stehen in lösbarem Eingriff mit Antriebs- oder Betätigungselementen, welche zur Aufnahme- oder Antriebseinheit gehören. Die in die Antriebseinheit eingesetzte Dosiereinheit ist seitlich von der Antriebseinheit abstehend angeordnet, sodass unterhalb der Dosiereinheit Platz für eine Waage zur Verfügung steht. Für weitere Einzelheiten wird auf die Europäische Patentanmeldung EP 1930702 A1 verwiesen.

Bei der in EP 1930702 A1 beschriebenen Dosiervorrichtung erfolgt das Fördern und Auflockern des pulver- oder pastenförmigen Dosiergutes durch Umrühren mit einem Rührwerk im Dosierkopf und ggf. einem zweiten Rührwerk im Entnahmegefäss. Eine weitere Dosiervorrichtung, welche in EP 1959244 B1 beschrieben wird, zeigt dieselbe Aufbauanordnung mit einer Antriebseinheit an welcher eine Dosiereinheit auswechselbar eingesetzt ist. Die Funktion des Förderns und Auflockerns wird hier jedoch durch Einwirkung von Schlägen auf die Dosiereinheit erzielt, wozu die Antriebseinheit mit einem Schlagwerk, d.h. im Wesentlichen mit einem Hammermechanismus, ausgerüstet ist. Diese Lösung erweist sich insbesondere als vorteilhaft bei gewissen pulverförmigen Dosiergütern wie z.B. Maisstärke, die sich beim Einsatz eines Rührwerks verdichten anstatt aufgelockert zu werden, sodass der Materialfluss durch den Dosierkopf blockiert wird und somit trotz vollständig geöffneter Austrittsmündung kein Dosiergut aus dem Dosierkopf ausgetragen werden kann. Für weitere Einzelheiten dieser Dosiervorrichtung mit Schlagwerk wird auf das Europäische Patent EP 1959244 B2 verwiesen.

Eine alternative Dosiervorrichtung mit Schlagwerk ist in US2008/302835 A1 offenbart.

Die vorstehend beschriebenen feststehenden Dosiervorrichtungen für pulver- oder pastenförmiges Dosiergut eignen sich hauptsächlich zum Einsatz an einem permanent oder vorübergehend eingerichteten Dosier-Arbeitsplatz, wo eine Dosiervorrichtung und eine Waage zusammengestellt und entweder direkt oder über einen Computer zu einem geschlossenen Regelkreis verbunden werden. Wenn jedoch die auftretenden Dosieranwendungen von variabler oder sporadischer Natur sind oder mit verschiedenen Waagen ausgeführt werden, so erweist sich ein fest eingerichteter Dosier-Arbeitsplatz als unpraktisch, und es besteht daher ein Bedarf für ein portables Dosiergerät, welches zur Ausführung eines Dosiervorgangs vom Benutzer mit einer Hand über einem auf einer Waage befindlichen Zielgefäss gehalten werden kann, wobei der Benutzer gleichzeitig die Gewichtsanzeige der Waage überwachen und manuell den Ausfluss des Dosiergutes regulieren und bei Erreichen des vorgegebenen Sollgewichts abbrechen kann.

Es wurde zwar daran gedacht, die oben genannten feststehenden Dosiervorrichtungen von EP 1930702 A1 und EP 1959244 B1 direkt als Handdosiergeräte in dem vorstehend beschriebenen Sinn einzusetzen; sie erweisen sich jedoch vor allem in ergonomischer Hinsicht als völlig ungeeignet für diesen Verwendungszweck. Einerseits könnten sie kaum von Hand mit sicherem Griff über einem auf einer Waage befindlichen Zielgefäss gehalten werden und andrerseits wäre es auch schwierig, dabei gleichzeitig die Gewichtsanzeige der Waage zu überwachen und manuell den Ausfluss des Dosiergutes zu regulieren.

Andrerseits enthält der Stand der Technik jedoch zahlreiche von Hand gehaltene Geräte zur Dosierung von Flüssigkeiten, die gemeinhin als Pipetten oder auch als Handpipetten (engl. handheld pipettes) bezeichnet werden. Im vorliegenden Zusammenhang sind insbesondere die sogenannten Kolbenhubpipetten von Interesse, wofür die in EP 1015110 B1 und EP 0496784 B1 beschriebenen Pipetten als Beispiele genannt werden können. Kolbenhubpipetten arbeiten nach dem Verdrängungsprinzip: Ein beweglicher Kolben verdrängt beim Hinunterdrücken die unter ihm liegende Luftsäule bzw. zieht die Luftsäule in der Aufwärtsbewegung mit sich nach oben und dadurch auch die zu pipettierende Flüssigkeit in die aufgesteckte Pipettenspitze. Diese Pipettenspitze ist ein Wegwerfartikel aus Plastik, nur sie kommt mit der Flüssigkeit in Berührung.

Die in US 2010/0199789 A1 beschriebene manuell-elektronische Hybrid-Pipette ist ebenfalls eine Kolbenpipette, unterscheidet sich jedoch von den vorangegangenen Beispielen dadurch, dass elektronische Mittel mit Mess-, Kalibrier- und Kompensationsfunktionen direkt im Gerät integriert sind.

Die vorstehend genannten Kolbenhubpipetten zeigen einen im wesentlichen stabförmigen Aufbau, wobei sich axial am einen Ende des Stabes der durch Daumendruck bewegte, unter Federvorspannung stehende Betätigungsknopf des Kolbens und am andern Ende die Auslassöffnung der Pipettenspitze befindet. In der vertikalen oder leicht geneigten Arbeitsstellung umgreift die Hand des Benützers den in ergonomischer Weise als Handgriff ausgebildeten obersten Teil des Stabes, sodass der Daumen auf dem Betätigungsknopf aufliegt.

Offensichtlich sind diese zur Dosierung von Flüssigkeiten dienenden Kolbenhubpipetten für pulver- oder pastenförmige Substanzen völlig ungeignet, da solche Substanzen nicht nach dem oben erklärten Verdrängungsrinzip in die Pipettenspitze eingesogen und aus dieser ausgestossen werden können. Ausserdem ist es mit der funktionell bedingten Anordnung des Handgriffs an dem der Austrittsöffnung entgegengesetzten Stabende schwierig, die Austrittsöffnung sicher und genau über einem meist relativ kleinen Zielgefäss zu halten, besonders wenn gleichzeitig die Gewichtsanzeige einer Waage überwacht werden muss.

In US 7,416,704 B2 wird ein von der üblichen stabförmigen Anordnung abweichender Aufbau einer Kolbenhubpipette gezeigt. Ein Grundkörper in der Form und Grösse eines Handgriffs trägt ebenfalls am oberen Ende den Daumenknopf zur Betätigung des Hubkolbens. Anstatt sich weiter nach unten stabförmig bis zur Austrittsöffnung fortzusetzen, hat jedoch der Grundkörper unten einen flachen Standfuss, und die Austrittsöffnung befindet sich am Ende eines seitlich vom Grundkörper schräg nach unten abstehenden Stutzens, auf welchen die wegwerfbare Pipettenspitze aufgesteckt wird. Die Anordnung der Austrittsöffnung an einem seitlichen Stutzen hat zwar den Vorteil, dass die Austrittsöffnung beim Dosieren sicher und genau über einem Zielgefäss gehalten werden kann. Die Verwendbarkeit dieser Pipette ist jedoch wie bei den vorangegangenen Beispielen auf das Dosieren von Flüssigkeiten beschränkt.

In WO 95/18365 wird ein als "Pulver-Pipette" bezeichnetes Handdosiergerät beschrieben, welches zwar nicht nach dem Hubkolbenprinzip arbeitet, jedoch wie die Flüssigkeitspipetten der ersten drei Beispiele einen stabförmigen Aufbau zeigt, wobei das eine Stabende als Haltegriff mit stirnseitigem Daumenbetätigungsknopf ausgebildet ist und das entgegengesetzte Stabende die Austrittsöffnung umfasst.

Pulver wird im geschlossenen Zustand der Austrittsöffnung durch eine seitliche Öffnung in das Handdosiergerät aufgenommen. Anschliessend wird durch Betätigung des Daumenknopfes der als Streuerelement ausgebildete Verschluss der Austrittsöffnung geöffnet und gleichzeitig in Drehung versetzt, wodurch das Dosiergut aus dem Dosiergerät ausgetragen wird.

Auch dieses Dosiergerät hat den oben beschriebenen Nachteil einer stabförmigen Anordnung. Ausserdem ist nachteilig, dass die zu dosierende pulverförmige Substanz aus einem offenen Behälter entnommen wird, wobei auch die Aussenseite des Gerätes mit Dosiergut kontaminiert werden kann. Sollen verschiedene Substanzen dosiert werden, so ist es fast unmöglich das Innere des Gerätes zuverlässig zu reinigen, was vor allem bei toxischen oder in andrer Hinsicht kritischen Substanzen ein Problem darstellt.

Aus den vorangegangenen Ausführungen ergibt sich, dass der oben beschriebene Bedarf für ein Handdosiergerät für pulver- oder pastenförmiges Dosiergut durch den Stand der Technik nicht gedeckt wird. Es ist deshalb die Aufgabe der vorliegenden Erfindung, ein Handdosiergerät für pulver- oder pastenförmiges Dosiergut zu schaffen, welches alle Funktionen der eingangs beschriebenen feststehenden Dosiervorrichtungen gemäss EP 1930702 A1 und EP 1959244 B1 ausführen kann, welches ferner einen zu den genannten Dosiervorrichtungen analogen Grundaufbau mit einer Antriebseinheit und einer darin einsetzbaren und auswechselbaren Dosiereinheit besitzt, und welches sich jedoch von den genannten Vorrichtungen durch eine kompakte, portable Ausführungsform unterscheidet.

Gelöst wird diese Aufgabe durch ein Dosiergerät bzw. Handdosiergerät mit den Merkmalen gemäss dem unabhängigen Hauptanspruch 1. Weitere Ausgestaltungen und Verkörperungen des Erfindungsgegenstandes ergeben sich aus den Unteransprüchen.

Ein Dosiergerät bzw. Handdosiergerät zum Dosieren von pulver- oder pastenförmigen Substanzen umfasst eine als Handgriff mit einem länglichen Grundkörper und einer den Grundkörper teilweise umhüllenden Griffschale ausgestaltete Antriebseinheit mit einer Haltevorrichtung sowie mindestens eine Dosiereinheit, welche in die Haltevorrichtung einsetzbar beziehungsweise aus dieser entfernbar ist und einen vertikal verschiebbaren Verschlussdorn mit einem Verschlusselement sowie eine durch das Verschlusselement verschliessbare Austrittsöffnung aufweist. Die Antriebseinheit enthält mindestens einen auf die in der Haltevorrichtung eingesetzte Dosiereinheit einwirkenden Aktuator mit einem Antriebsmotor und einem Getriebe, ein manuell bedienbares Betätigungselement und eine in Betriebsposition im Wesentlichen vertikal ausgerichtete und vom Motor über das Getriebe antreibbare Antriebswelle mit einem ersten, dem Betätigungselement zugewandten Ende und einem zweiten, dem Verschlussdorn der eingesetzten Dosiereinheit zugewandten Ende, wobei durch manuelle Bewegung des Betätigungselements die Antriebswelle von einer Ausgangsposition in eine Eingriffsposition gebracht werden kann, in welcher das zweite Ende mit dem Verschlussdorn im Eingriff steht, und wobei der Verschlussdorn nach erfolgtem Eingriff durch weitere manuelle Bewegung des Betätigungselements in einen Öffnungsbereich gebracht werden kann, in welchem das Verschlusselement die Austrittsöffnung in variablem, positionsabhängigem Ausmass freigibt. In der Betriebsposition des Handdosiergerätes ist die Antriebswelle in einem seitlich auskragenden Teil des Grundkörpers angeordnet. Im Innern des Grundkörpers befindet sich ein Hohlraum, in welchem mindestens zu einem grösseren Teil der Motor und das Getriebe untergebracht sind. Vorteilhafterweise ist der Motor durch manuelle Einwirkung auf das Betätigungselement ein- und ausschaltbar.

Die Energieversorgung des Motors erfolgt bevorzugt mittels einer Batterie, welche oberhalb des Motors angeordnet ist. Dabei ist es von besonderem Vorteil, wenn die Batterie ohne Einsatz eines Werkzeuges entfernt und ersetzt werden kann. Anstelle einer Batterie kann auch ein wiederaufladbarer Akku eingesetzt werden.

In einer bevorzugten Ausführungsform bilden der Motor, das Getriebe und die Antriebswelle eine fest verbundene Aktuatoreineit, welche im Grundkörper in Betriebsposition vertikal verschiebbar gelagert, mit dem Betätigungselement verbunden und durch manuelle Einwirkung auf dasselbe verschiebar ist. Das Getriebe der Aktuatoreinheit ist vorzugsweise ein Stirnradgetriebe, wobei die Rotationsachsen der Zahnräder in der Betriebsposition des Handdosiergerätes im Wesentlichen vertikal ausgerichtet sind.

Die in Betriebsposition vertikale Verschiebung der Aktuatoreinheit von der Ausgangsposition in die Eingriffsposition und weiter in den Öffnungsbereich erfolgt vorzugsweise gegen den Widerstand einer ersten, in der Antriebseinheit abgestützten Rückstellfeder, welche bei Nachlassen der manuellen Einwirkung auf das Betätigungselement die Aktuatoreinheit gegen die Ausgangsposition zurückdrängt.

Die in Betriebsposition vertikale Verschiebung des mit der Antriebswelle im Eingriff stehenden Verschlussdorns von der Eingriffsposition in den Öffnungsbereich erfolgt vorzugsweise gegen den zusätzlichen Widerstand einer zweiten, in der Dosiereinheit abgestützten Rückstellfeder, welche den Verschlussdorn axial nach oben gegen die Antriebswelle drückt.

Vorzugsweise umfasst die Aktuatoreinheit ein Rückhalteelement welches beim Erreichen der Eingriffsposition in einem Verriegelungselement einklinkt, welches eine Rückwärtsbewegung der Aktuatoreinheit in Richtung der Ausgangsposition verhindert, jedoch die Weiterbewegung in den Öffnungsbereich zulässt. Zum Lösen der Verriegelung befindet sich auf der Aussenseite der Antriebseinheit mindestens ein durch Fingerdruck zu betätigendes Entriegelungselement.

Durch den Eingriff des zweiten Endes der vom Motor über das Getriebe angetriebenen Antriebswelle wird der Verschlussdorn in Umdrehung versetzt. Ausserdem umfasst die Aktuatoreinheit in vorteilhafter Weise eine mit der Antriebswelle verbundene und ebenfalls vom Motor über das Getriebe angetriebene Schlagvorrichtung, womit der Drehung der Antriebswelle gleichzeitig eine kurzhubige, rasche Schlagbewegung in Richtung der Drehachse der Antriebswelle überlagert werden kann. Die der Drehbewegung überlagerte Schlagbewegung der Antriebsachse wird durch die axiale Eingriffsdruckkraft von der Antriebswelle auf den Verschlussdorn übertragen.

Vorzugsweise ist mit dem Verschlussdorn ein Rührelement fest verbunden, wodurch die vom Aktuator erzeugte und von der Antriebswelle auf den Verschlussdorn übertragene Umdrehung und gleichzeitige Schlagbewegung eine Lockerung des Dosiergutes bewirken kann.

Ferner kann an der Dosiereinheit, insbesondere am Dosierkopf, ein Identifikationsmittel, beispielsweise ein RFID-Transponder angeordnet sein, auf welchem Daten betreffend die in der Dosiereinheit enthaltene Dosiersubstanz gespeichert sind.

Zweckmässigerweise umfasst die Antriebseinheit eine geeignete Lese/Schreibvorrichtung, welche z.B. für den drahtlosen Datenaustausch mit einem Computer ausgerüstet ist. Damit können einerseits die auf dem Identifikationsmittel gespeicherten Daten gelesen und an den Computer übermittelt werden, und umgekehrt können vom Computer erzeugte und an die Lese/Schreibvorrichtung übermittelte Daten auf dem Identifikationsmittel gespeichert werden.

In einer vorteilhaften Ausgestaltung des erfindungsgemässen Handdosiergerätes ist an dem in Betriebsstellung oberen Ende der den Grundkörper umhüllenden Griffschale ein nasenartiger Vorsprung ausgebildet, welcher im Betrieb auf dem Zeigefinger der den Grundkörper umschliessenden Hand aufliegt und damit ein sicheres Halten des Handdosiergerätes gewährleistet.

Ein zeitlicher Ablauf beim Dosieren von pulverförmigem Dosiergut mit einer erfindungsgemässen Handdosiervorrichtung kann wie folgt beschrieben werden:
- In einer ersten Phase wird eine das Dosiergut enthaltende Dosiereinheit in die in Ausgangsposition befindliche Antriebseinheit des Handdosiergerätes eingesetzt, wobei die Dosiereinheit durch automatisches Einklinken in der Haltevorrichtung gesichert wird,
- In einer zweiten Phase wird das Handdosiergerät in senkrechter Orientierung mit der Austrittsöffnung nach unten über einen Zielbereich gebracht, insbesondere über ein Zielgefäss, welches sich auf einer Waage befindet.
- In einer dritten Phase wird durch Daumendruck auf das ,Betätigungselement zunächst der Kontaktschalter geschlossen und dadurch die Drehbewegung der Antriebswelle gestartet.
- In einer vierten Phase wird durch weiteren, verstärkten Daumendruck auf das Betätigungselement und Abwärtsbewegung desselben die Antriebswelle in die Eingriffsposition bewegt, wobei das untere Ende der Antriebswelle dank der bereits laufenden Drehbewegung selbsttätig den Eingriff mit dem Verschlussdorn der eingesetzten Dosiereinheit findet.

Gleichzeitig kommt bei Erreichen der vollen Eingriffsposition ein Verriegelungsmechanismus zum Einklinken, welcher den Rückzug der Antriebswelle aus der Eingriffsposition verhindert. Bei Wegnahme des Daumendrucks bleibt somit der Eingriff erhalten, jedoch wird der Kontaktschalter geöffnet und damit die Drehbewegung gestoppt.
- In einer fünften Phase wird durch weiter verstärkten Daumendruck auf das Betätigungselement der Verschlussdorn in den Öffnungsbereich verschoben, wobei durch den von der zweiten Rückstellfeder bewirkten Gegendruck des Verschlussdorns auf die Antriebswelle nun auch eine vertikale, der Drehung überlagerte Schlagbewegung der Antriebswelle aktiviert wird und das Verschlusselement die Austrittsöffnung in einem variablen, durch Änderung des Daumendrucks kontrollierbaren Ausmasse freigibt, sodass das durch die Dreh- und Schlagbewegung gelockerte Dosiergut durch die Austrittsöffnung in das Zielgefäss ausfliessen kann. Durch nachlassenden Daumendruck wird die Austrittsöffnung verkleinert, bzw. geschlossen, und bei völliger Wegnahme des Daumendrucks schaltet der Motor ab, während die Antriebswelle in Eingriffsposition bleibt.

Nach Beendigung eines Dosiervorgangs kann das weiterhin in Eingriffsposition befindliche Handdosiergerät für weitere Dosierungen mit der gleichen Dosiereinheit verwendet werden. Zum Entfernen und Auswechseln der Dosiereinheit wird das mindestens eine Entriegelungselement betätigt und damit die Verriegelung in der Eingriffsposition gelöst, sodass die Antriebswelle und das Betätigungselement durch die erste Rückstellfeder in die Ausgangsposition zurückgebracht werden und die Dosiereinheit aus der Haltevorrichtung ausgeklinkt werden kann.

Das untere Ende des Grundkörpers ist in Betriebsposition dem Zielgefäss zugewandt. An diesem unteren Ende ist ein Beleuchtungselement angeordnet. Die Helligkeit des Beleuchtungselements hängt vom Betriebszustand des Handdosiergeräts ab. Falls das Handdosiergerät nicht betriebsbereit ist, ist das Beleuchtungselement ausgeschaltet. Ist das Handdosiergerät dosierbereit, nimmt das Beleuchtungselement einen ersten Helligkeitsgrad ein. Während des Dosiervorgangs nimmt das Beleuchtungselement einen zweiten Helligkeitsgrad ein. Der zweite Helligkeitsgrad ist derart gewählt, dass das Zielgefäss gut beleuchtet ist und somit der Benutzer den Dosiervorgang visuell überwachen kann. Der erste Helligkeitsgrad ist kleiner als der zweite Helligkeitsgrad. Damit das Handdosiergerät dosierbereit ist, muss die Dosiereinheit korrekt in das Handdosiergerät eingesetzt sein.

Einzelheiten des erfindungsgemässen Handdosiergeräts ergeben sich anhand der Beschreibung der in den Zeichnungen dargestellten Ausführungsbeispiele. Es zeigen:
- Figur 1: eine Explosionsdarstellung des erfindungsgemässen Handdosiergeräts;
- Figur 2: das erfindungsgemässe Handdosiergerät mit eingesetzter Dosiereinheit, in Ausgangsstellung;
- Figur 3: das erfindungsgemässe Handdosiergerät mit eingesetzter Dosiereinheit, in Eingriffsstellung;
- Figur 4: das erfindungsgemässe Handdosiergerät mit eingesetzter Dosiereinheit, in der maximalen Öffnungsstellung;
- Figur 5: eine Querschnittszeichnung der Aktuatoreinheit in seitlicher Sicht;
- Figur 6: die geöffnete Aktuatoreinheit, mit Sicht von oben auf das Getriebe.

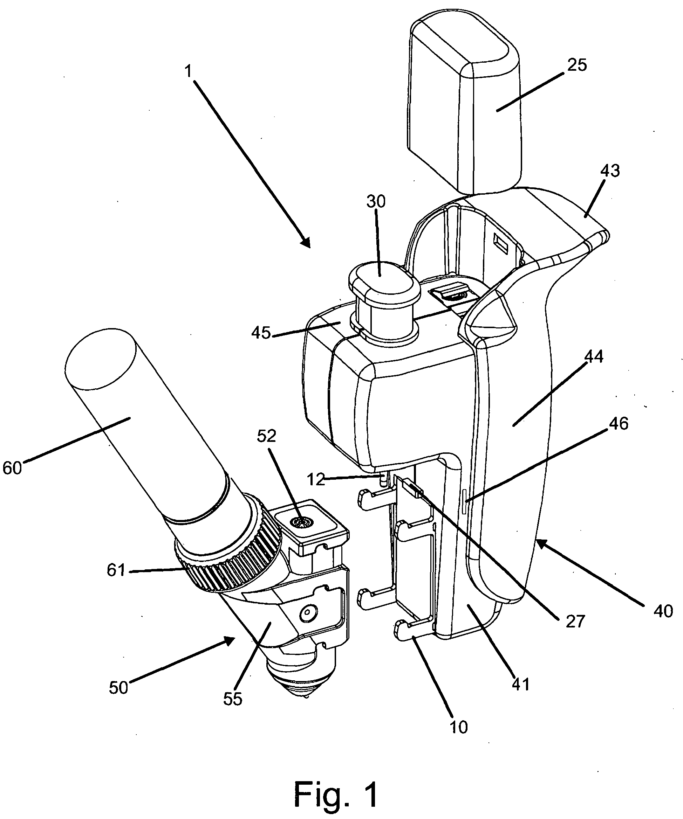

Figur 1 zeigt eine bevorzugte Ausführungsform des erfindungsgemässen Handdosiergeräts 1 in einer Explosionsdarstellung, worin man die Dosiereinheit 50 und die Antriebseinheit 40 sowie die von der Antriebseinheit abgenommene Batterie 25 erkennt. Die Dosiereinheit 50 setzt sich im Wesentlichen aus dem Dosierkopf 55 und dem Entnahmegefäss 60 zusammen, welche durch einen Adapter 61 miteinander verbunden sind. Bei kleineren Dosiermengen reicht der Dosierkopf 55 allein aus, um die zu dosierende Substanz aufzunehmen. Das Entnahmegefäss 60 wird in diesem Falle nicht benötigt und der Dosierkopf 55 kann stattdessen mit einem geeigneten Verschlusselement (nicht abgebildet) verschlossen werden. Am Dosierkopf 55 erkennt man ausserdem das obere stirnseitige Ende des Verschlussdorns 52.

Die Antriebseinheit 40 ist in einer zum Ergreifen mit der rechten Hand geeigneten Position dargestellt. Die äussere Gestaltung der Antriebseinheit ist symmetrisch, sodass sie sowohl rechts- als auch linkshändig benützt werden kann. Im Einzelnen erkennt man den Grundkörper 41 mit der Griffschale 44 und der Haltevorrichtung 10, in welche der Dosierkopf 55 eingesetzt werden kann. An einem seitlich auskragenden Teil 45 des Grundkörpers 41 ist das nach oben herausragende Betätigungselement 30 sowie die nach unten herausragende Antriebswelle 12 ersichtlich. An dem in bezug auf die Abbildung oberen Ende der Griffschale 44 ist ein nasenartiger Vorsprung 43 ausgebildet, welcher im Betrieb auf der die Griffschale 44 umschliessenden Hand aufliegt und damit ein sicheres Halten des Handdosiergerätes 1 gewährleistet. Ferner zeigt die Abbildung das eine von zwei im Randbereich der Griffschale 44 angeordneten Entriegelungselementen 46, welche einander symmetrisch gegenüberliegend angeordnet sind. Im Betrieb des Handdosiergerätes 1 wird das Betätigungselement 30 mit dem Daumen bewegt, und das jeweils für links- oder rechtshändige Bedienung passende Entriegelungselement 46 wird z.B. mit dem Ringfinger der die Griffschale 44 umschliessenden Hand betätigt.

Das untere Ende des Grundkörpers 41 ist in Betriebsposition dem Zielgefäss zugewandt. An diesem unteren Ende ist ein Beleuchtungselement 48 angeordnet. Die Hauptfunktion dieser Beleuchtungselements 48 ist die Beleuchtung des Zielgefässes während des Dosiervorgangs. Mit Hilfe dieses Beleuchtungselements 48 kann ausserdem durch Abstufung der Lichtintensität der Betriebszustand angezeigt werden.

In der dargestellten bevorzugten Ausführung des Handdosiergerätes ist die Batterie 25 wie in der Abbildung gezeigt als eine von aussen zugängliche und von oben einsetzbare und austauschbare Einheit gestaltet.

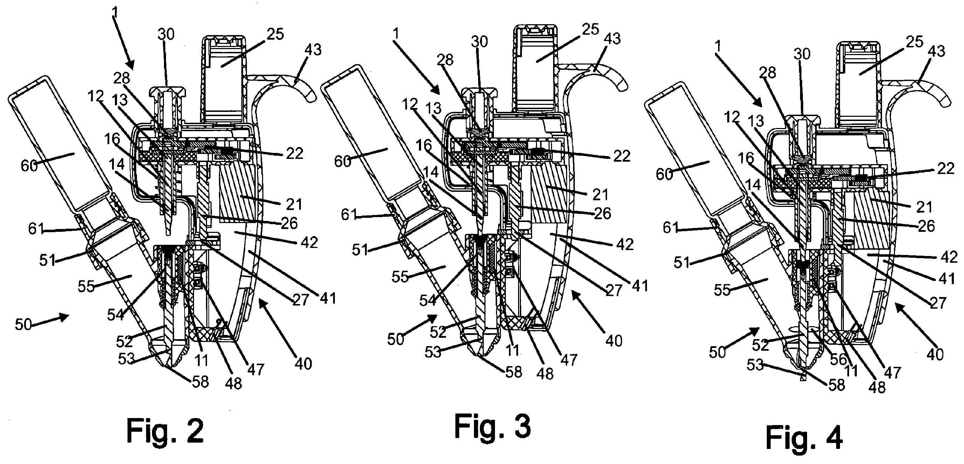

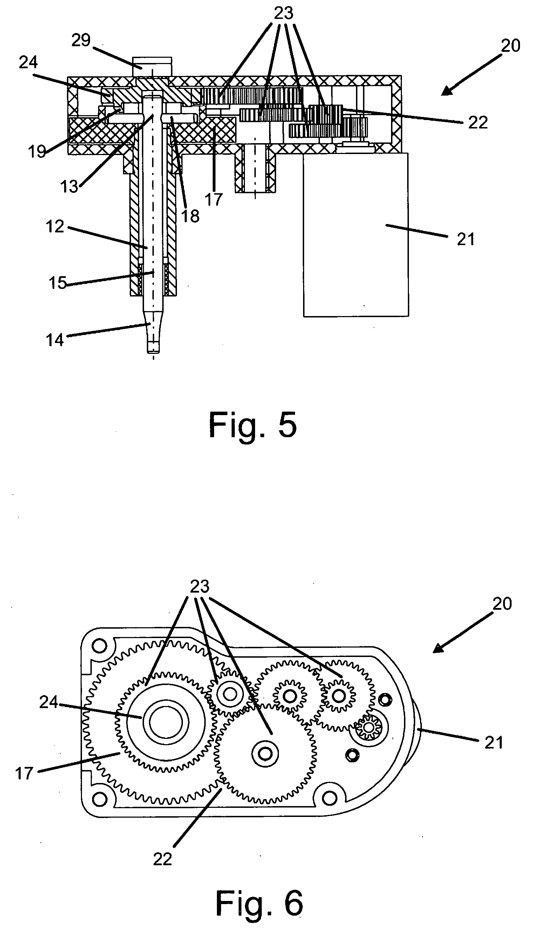

Der Innenaufbau und der Funktionsablauf des Handdosiergerätes 1 werden nachfolgend anhand der Figuren 2 bis 4 erläutert, welche das Handdosiergerät 1 mit eingesetzter Dosiereinheit 50-im Schnitt darstellen, wobei in Figur 2 die Ausgangsposition, in Figur 3 die Eingriffsposition, und in Figur 4 die maximale Öffnungsposition gezeigt wird. Im oberen Teil des Hohlraumes 42 im Innern des Grundkörpers 41 ist die Aktuatoreineit 20 (s. Figur 5), welche den Motor 21, das Getriebe 22 und die Antriebswelle 12 umfasst, vertikal verschiebbar angeordnet und wird durch die vorgespannte Rückstellfeder 16, welche als Schraubendruckfeder die Antriebswelle 12 umgibt, in der Ausgangsposition gehalten. Ein mit der Antriebswelle 12 konzentrisches Betätigungselement 30, welches durch eine Durchführung des Grundkörpers 41 nach oben ragt, ist über einen Druckkontaktschalter 28 so mit der Aktuatoreinheit 20 verbunden, dass bei leichtem Druck auf das Betätigungselement 30 der Kontaktschalter 28 geschlossen wird. Dadurch wird die Antriebswelle 12 vom Motor 21 über das Getriebe 22 in Drehung gesetzt, wie weiter unten im Zusammenhang mit den Figuren 5 und 6 näher erläutert wird. Solange der Kontaktschalter 28 durch Druck auf das Betätigungselement 30 geschlossen bleibt, wird diese Drehbewegung aufrechterhalten und wird durch Wegnahme des Drucks auf das Betätigungselement 30 sofort gestoppt. Durch weitere und verstärkte manuelle Druckeinwirkung auf das Betätigungselement 30 wird die Aktuatoreinheit 20 mit der Antriebswelle 12 gegen den Widerstand der ersten Rückstellfeder 16 nach unten in die in Figur 3 gezeigte Eingriffsposition bewegt, wobei das zweite Ende 14 der Antriebswelle 12 dank der Drehbewegung selbsttätig den Eingriff im Verschlussdorn 52 der eingesetzten Dosiereinheit 50 findet.

Ein bolzenförmiges, mit der Aktuatoreinheit 20 fest verbundenes Rückhalteelement 26 erstreckt sich von der Aktuatoreinheit 20 nach unten gegen ein am Grundkörper 41 festgelegtes Verriegelungselement 27. Bei Erreichen der vollen Eingriffsposition klinkt das Verriegelungselement 27 an dem bolzenförmigen Rückhaltement 26 ein, sodass einerseits eine Aufwärtsbewegung der Aktuatoreinheit 20 und damit ein Rückzug der Antriebswelle 12 aus dem Eingriff mit dem Verschlussdorn 52 auch bei Wegnahme des Drucks auf das Betätigungselement 30 blockiert wird und andrerseits eine weitere Abwärtsbewegung der Aktuatoreinheit 20 mit der Antriebswelle 12 weiterhin möglich ist. Solange die Antriebswelle 12 mit dem Verschlussdorn 52 der eingesetzten Dosiereinheit 50 im Eingriff bleibt, kann die Dosiereinheit 50 nicht mehr von der Antriebseinheit 40 gelöst werden.

Für eine weitere Abwärtsbewegung aus der Eingriffsposition muss die Vorspannkraft der zweiten Rückstellfeder 54 des Verschlussdorns 52 überwunden werden. Dabei wird, wie weiter unten im Zusammenhang mit den Figuren 5 und 6 erläutert, durch die Gegenkraft des Verschlussdorns 52 auf die Antriebswelle 12 eine zusätzliche axiale Schlagbewegung der Antriebswelle 12 aktiviert.

Figur 4 zeigt das Handdosiergerät 1 mit eingesetzter Dosiereinheit 50 in der maximal geöffneten Position, wobei das Verschlusselement 53 nach unten aus der Austrittsöffnung 58 herausragt und dadurch einen Teil des Öffnungsquerschnitts freigibt, sodass das durch die Dreh- und Schlagbewegung gelockerte Dosiergut durch die Austrittsöffnung ausgetragen, d.h. ausdosiert wird. Dabei kann die lockernde Wirkung der Dreh- und Schlagbewegung ggf. durch ein am Verschlussdorn 52 angeordnetes Rührelement 56 verstärkt werden. Bei der maximal geöffneten Position des Verschlussdorns 52 ist das Betätigungselement 30 im Anschlag mit dem Gehäuse des Grundkörpers 41, wodurch der axiale Verschiebungsbereich der Antriebswelle 12 und somit auch des Verschlussdorns 52 nach unten begrenzt wird. Die Verschiebung des Verschlussdorns 52 aus der Eingriffsposition gemäss Figur 3 durch einen Öffnungsbereich bis zur maximalen Öffnungsposition gemäss Figur 4 erfolgt wie oben erwähnt gegen den zusätzlichen Widerstand der zweiten, im Dosierkopf 55 abgestützten Rückstellfeder 54, welche den Verschlussdorn 52 nach oben gegen die Antriebswelle 12 drückt und mit ihr in Eingriff hält. Durch Änderung des Daumendruckes auf das Betätigungselement 30 wird die vertikale Position des Verschlusselements 53 und damit der freigegebenene Teil des Öffnungsquerschnitts der Austrittsöffnung 58 variiert, wodurch der Ausfluss des Dosiergutes aus der Austrittsöffnung 58 kontrolliert und bei Erreichen einer vorgegebenen Dosiermenge gestoppt werden kann.

Bei völliger Wegnahme des Daumendrucks schaltet der Motor 21 ab, doch verbleibt die Angriffswelle 12 im Eingriff mit dem Verschlussdorn 52 wie oben im Zusammenhang mit Figur 3 erläutert, sodass die Dosiereinheit 50 nicht von der Antriebseinheit 40 enfernt werden kann. In diesem Zustand kann das Handdosiergerät 1 für weitere Dosierungen derselben Substanz verwendet werden, solange in der Dosiereinheit 50 ein genügender Vorrat vorhanden ist. Soll die Dosiereinheit 50 abgenommen oder ausgetauscht werden, so betätigt man eines der weiter oben beschriebenen Entriegelungselemente 46 (siehe Figur 1), wodurch das Verriegelungselement 27 aus dem bolzenförmigen Rückhalteelement 26 ausgeklinkt wird, sodass die Aktuatoreinheit 20 samt Antriebswelle 12 und Betätigungselement 30 unter dem Druck der Rückstellfeder 16 in die in Figur 2 dargestellte Ausgangsposition zurückkehrt und die Dosiereinheit 50 aus ihrem Sitz in der Haltevorrichtung 10 der Antriebseinheit 40 herausgenommen werden kann.

Figur 5 zeigt die Aktuatoreinheit 20 mit Motor 21, Getriebe 22 und Antriebswelle 12 in einer Querschnittszeichnung in seitlicher Sicht, und Figur 6 zeigt das Innere derselben Aktuatoreinheit 20 mit Blickrichtung von oben. In Figur 5 erkennt man das oben auf der Aktuatoreinheit angeordnete Befestigungselement 29 für den Druckkontaktschalter 28, auf welchem das Betätigungselement 30 aufsitzt (siehe Figuren 1 bis 4), sodass die Stromversorgung des Motors 21 durch Ausüben einer Druckkraft auf das Betätigungselement 30 eingeschaltet und bei Wegnahme der Druckkraft ausgeschaltet wird. Vom Motor 21 werden über zwischengeschaltete Zahnräder 23 einerseits das Abtriebsrad 17 und andrerseits das Schlagrad 24 mit voneinander verschiedenen Drehzahlen angetrieben. Mit dem Abtriebsrad 17 ist die Antriebsachse 12 durch einen in einer entsprechenden Ausnehmung des Abtriebsrades 17 angeordneten Mitnehmerstift 18 drehfest, jedoch axial beweglich, verbunden. In dem in Figur 5 gezeigten Zustand, in welchem keine axiale Druckkraft von der Antriebswelle 12 auf den Verschlussdorn 52 einer eingesetzten Dosiereinheit 50 zu übertragen ist, liegt die Antriebswelle 12 unter ihrem Eigengewicht mit dem Mitnehmerstift auf dem Grund der Ausnehmung im Abtriebsrad 17 auf und macht die Drehbewegung des Abtriebsrades 17 mit, jedoch findet noch keine axiale Schlagbewegung statt.

Wenn jedoch die Antriebswelle 12 in druckübertragendem Eingriff mit dem Verschlussdorn 52 einer eingesetzten Dosiereinheit 50 steht, so wird die Antriebswelle 12 durch die von der zweiten Rückstellfeder 54 bewirkten Gegenkraft des Verschlussdorns 52 nach oben gedrückt, wodurch der Mitnehmerstift 18 vom Grund der Ausnehmung im Abtriebsrad 17 abgehoben und gegen eine vom Schlagrad 24 nach unten vorstehende ringförmige Sägezahnrampe 19 gedrängt und mit derselben in gleitenden Eingriff gebracht wird. Aufgrund der vom Abtriebsrad 17 verschiedenen Drehgeschwindigkeit des Schlagrades 24 wird durch das Gleiten des Mitnehmerstifts 18 entlang der Sägezahnrampe 19 eine kurzhubige axiale Schlagbewegung der Antriebswelle 12 erzeugt, welche der Drehbewegung überlagert ist.

Aus dem gesagten ergibt sich, dass bei geschlossenem Druckkontaktschalter 28 einerseits die Drehbewegung der Antriebswelle 12 in jedem Zustand des Dosiergeräts 1, d.h. von der Ausgangsposition bis zur vollen Öffnungsposition, stattfindet und dass andrerseits die überlagerte axiale Schlagbewegung nur solange anhält, als eine axiale Druckkraft von der Antriebswelle 12 auf den Verschlussdorn 52 einer eingesetzten Dosiereinheit 50 ausgeübt wird, d.h. wenn sich der Verschlussdorn 52 im Öffnungsbereich befindet und somit Dosiersubstanz aus Austrittsöffnung 58 ausgetragen wird.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Beispielsweise ist auch eine Ausführungsform denkbar, bei welcher die der Drehbewegung überlagerte axiale Schlagbewegung der Antriebswelle z.B. mit elektromagnetischen, piezoelektrischen oder pneumatischen Mitteln erzeugt wird. Es versteht sich, dass derartige Ausführungsvarianten durchaus als im Rahmen der Erfindung liegend zu betrachten sind.

### Bezugszeichenliste

- 1: (Hand)Dosiergerät
- 10: Haltevorrichtung
- 11: Identifikationsmittel, RFID Transponder
- 12: Antriebswelle
- 13: Erstes Ende der Antriebswelle
- 14: Zweites Ende der Antriebswelle
- 15: Antriebswellenachse
- 16: Erste Rückstellfeder
- 17: Abtriebsrad
- 18: Mitnehmerstift
- 19: Sägezahnrampe
- 20: Aktuatoreinheit
- 21: Motor
- 22: Getriebe
- 23: Zahnräder des Getriebes
- 24: Schlagrad, Schlagvorrichtung
- 25: Batterie
- 26: Rückhalteelement
- 27: Verriegelungselement
- 28: Druckkontaktschalter
- 29: Befestigungselement für Druckkontaktschalter 28
- 30: Betätigungselement
- 40: Antriebseinheit
- 41: Grundkörper
- 42: Hohlraum
- 43: Nasenartiger Vorsprung, Nase
- 44: Griffschale
- 45: Auskragender Teil von 41
- 46: Entriegelungselement
- 47: Lese/Schreibvorrichtung
- 48: Beleuchtungselement
- 50: Dosiereinheit
- 51: Aufnahme des Entnahmegefässes
- 52: Verschlussdorn
- 53: Verschlusselement
- 54: Zweite Rückstellfeder
- 55: Dosierkopf
- 56: Rührelement
- 58: Austrittsöffnung
- 60: Entnahmegefäss
- 61: Adapter

## Patentansprüche

1. Dosiergerät (1) zum Dosieren von pulverförmigen und von pastenförmigen Substanzen, umfassend mindestens eine Dosiereinheit (50), welche einen vertikal verschiebbaren Verschlussdorn (52) mit einem Verschlusselement (53) sowie eine durch das Verschlusselement (53) verschliessbare Austrittsöffnung (58) aufweist, **dadurch gekennzeichnet dass** das Dosiergerät (1) eine als Handgriff ausgestaltete Antriebseinheit (40) mit einem länglichen Grundkörper (41) und eine Haltevorrichtung (10) umfasst und in die Haltevorrichtung (10) die mindestens eine Dosiereinheit (50) in die Haltevorrichtung (10) einsetzbar beziehungsweise aus dieser entfernbar ist und die Antriebseinheit (40) mindestens einen auf eine eingesetzte Dosiereinheit (50) einwirkenden Aktuator (20) mit einem Antriebsmotor (21) und einem Getriebe (22), ein manuell bedienbares Betätigungselement (30) sowie eine in Betriebsposition im Wesentlichen vertikal ausgerichtete und vom Motor (21) über das Getriebe (22) drehantreibbare Antriebswelle (12) mit einem dem Betätigungselement (30) zugewandten ersten Ende (13) und einem dem Verschlussdorn (52) der eingesetzten Dosiereinheit (50) zugewandten zweiten Ende (14) enthält, wobei durch manuelle Bewegung des Betätigungselements (30) die Antriebswelle (12) axial von einer Ausgangsposition in eine Eingriffsposition verschiebbar ist, in welcher das zweite Ende (14) mit dem Verschlussdorn (52) im Eingriff steht und wobei der Verschlussdorn (52) nach erfolgtem Eingriff durch weitere manuelle Bewegung des Betätigungselements (30) in einen Öffnungsbereich gebracht werden kann, in welchem das Verschlusselement (53) die Austrittsöffnung (58) in variablem, positionsabhängigem Ausmass freigibt, wobei die Antriebswelle (12) und das Betätigungselement (30) in einem in der Betriebsposition des Dosiergerätes (1) in einem seitlich auskragenden Teil (45) des Grundkörpers (41) angeordnet sind und dass der Grundkörper (41) einen Hohlraum (42) aufweist, in welchem mindestens zu einem grösseren Teil der Motor (21) und das Getriebe (22) angeordnet sind.

2. Dosiergerät (1) nach Anspruch 1, **dadurch gekennzeichnet, dass** der Motor (21) und die von ihm über das Getriebe (22) erzeugte Drehbewegung der Antriebswelle (12) durch manuelle Einwirkung auf das Betätigungselement (30) einschaltbar und durch Entfernung der manuellen Einwirkung ausschaltbar ist.

3. Dosiergerät (1) nach Anspruch 1 oder 2, **dadurch gekennzeichnet, dass** der Motor (21), das Getriebe (22) und die Antriebswelle (12) in einer Aktuatoreineit vereinigt sind, welche im Grundkörper (41) in Betriebsposition vertikal verschiebbar gelagert, mit dem Betätigungselement (30) verbunden und durch manuelle Einwirkung auf dasselbe verschiebar ist.

4. Dosiergerät (1) nach einem der Ansprüche 1 bis 3, **dadurch gekennzeichnet, dass** das Getriebe (22) der Aktuatoreinheit (20) vorzugsweise ein Stirnzahnradgetriebe ist, wobei die Rotationsachsen der Zahnräder (23) in der Betriebsposition des Dosiergerätes (1) im Wesentlichen vertikal ausgerichtet sind.

5. Dosiergerät (1) nach einem der Ansprüche 1 bis 4, **dadurch gekennzeichnet, dass** die in Betriebsposition vertikale Verschiebung der Aktuatoreinheit (20) von der Ausgangsposition in die Eingriffsposition und weiter in den Öffnungsbereich gegen den Widerstand einer im Grundkörper (41) abgestützten ersten Rückstellfeder (16) erfolgt, welche bei Nachlassen der manuellen Einwirkung auf das Betätigungselement (30) die Aktuatoreinheit (20) gegen die Ausgangsposition zurückdrängt.

6. Dosiergerät (1) nach Anspruch 5, **dadurch gekennzeichnet, dass** die in Betriebsposition vertikale Verschiebung des mit der Antriebswelle (12) im Eingriff stehenden Verschlussdorns (52) von der Eingriffsposition in den Öffnungsbereich gegen den Widerstand einer in der Dosiereinheit (50) abgestützten zweiten Rückstellfeder (54) erfolgt, welche den Verschlussdorn (52) axial nach oben gegen die Antriebswelle (12) drückt.

7. Dosiergerät (1) nach einem der Ansprüche 1 bis 6, **dadurch gekennzeichnet, dass** die Aktuatoreinheit (20) ein Rückhalteelement (26) umfasst, welches beim Erreichen der Eingriffsposition in einem im Grundkörper (41) angeordneten Verriegelungselement (27) einklinkt und dadurch eine Rückwärtsbewegung der Aktuatoreinheit (20) in Richtung der Ausgangsposition verhindert, jedoch die Weiterbewegung in den Öffnungsbereich zulässt.

8. Dosiergerät (1) nach Anspruch 7, **dadurch gekennzeichnet, dass** sich auf der Aussenseite des Grundkörpers (41) mindestens ein durch Fingerdruck zu betätigendes Entriegelungselement (46) zum Lösen des Verriegelungelements (27) befindet.

9. Dosiergerät (1) nach einem der vorhergehenden Ansprüche, **dadurch gekennzeichnet, dass** durch den Eingriff der vom Motor (21) über das Getriebe (22) angetriebenen Antriebswelle (12) der Verschlussdorn (52) in Umdrehung versetzbar ist.

10. Dosiergerät (1) nach einem der vorhergehenden Ansprüche, **dadurch gekennzeichnet, dass** die Aktuatoreinheit (20) eine Schlagvorrichtung (24) umfasst, womit der Drehung der Antriebswelle (12) und des mit ihr im Eingriff stehenden Verschlussdorns (52) eine kurzhubige, axiale Schlagbewegung überlagerbar ist.

11. Dosiergerät (1) nach Anspruch 10, **dadurch gekennzeichnet, dass** die axiale Schlagbewegung der Antriebswelle (12) dadurch erzeugbar ist, dass unter einer axiale Gegendruckkraft des mit der zweiten Rückstellfeder (54) vorgespannten Verschlussdorns (52) die Antriebswelle (12) in Wirkverbindung mit der Schlagvorrichtung (24) gebracht werden kann, und dass in Abwesenheit der Gegendruckkraft des Verschlussdorns (52) die axiale Schlagbewegung der Antriebswelle (12) ausschaltbar ist.

12. Dosiergerät (1) nach einem der vorhergehenden Ansprüche, **dadurch gekennzeichnet, dass** im Grundkörper (41) eine Lese-/Schreibvorrichtung (47) angeordnet ist mit welcher auf einem an der Dosiereinheit (50) angeordneten Identifikationsmittel (11) gespeicherte Daten auf die Lese-/Schreibvorrichtung (47) übermittelbar sind.

13. Dosiergerät (1) nach einem der vorhergehenden Ansprüche, **dadurch gekennzeichnet, dass** an dem in Betriebsstellung oberen Ende der Griffschale (44) ein nasenartiger Vorsprung (43) ausgebildet ist, welcher im Betrieb auf der den Grundkörper (41) umschliessenden Hand aufliegt und damit ein sicheres Halten des Handdosiergerätes (1) gewährleistet.

14. Dosiergerät (1) nach einem der vorhergehenden Ansprüche, **dadurch gekennzeichnet, dass** die Antriebseinheit (40) zur Energieversorgung des Motors (21) ein Energieversorgunselement (25) umfasst, welche oberhalb des Motors auf dem Grundkörper (41) angeordnet ist und ohne Einsatz eines Werkzeuges entfernt und ersetzt werden kann.

15. Verfahren zum Dosieren von pulverförmigem Dosiergut mit einem Dosiergerät (1) nach einem der Ansprüche 1 bis 14, **dadurch gekennzeichnet, dass**
- eine das Dosiergut enthaltende Dosiereinheit (50) in die Haltevorrichtung (10) der Antriebseinheit (40) eingesetzt und durch automatisches Einklinken in der Haltevorrichtung (10) gesichert wird;
- das Dosiergerät (1) in senkrechter Orientierung mit der Austrittsöffnung (58) nach unten über einem Zielgefäss gehalten wird;
- durch manuelle Einwirkung auf das Betätigungselement (30) zunächst der Kontaktschalter (28) geschlossen und dadurch die Drehbewegung der Antriebswelle (12) gestartet wird;
- durch weiteren, verstärkten Daumendruck auf das Betätigungselement (30) die Antriebswelle (12) in die Eingriffsposition bewegt wird, wobei das zweite Ende (14) der sich drehenden Antriebswelle (12) selbsttätig den Eingriff im Verschlussdorn (52) findet und wobei gleichzeitig bei Erreichen der vollen Eingriffsposition ein Einklinkmechanismus (26, 27) zur Wirkung kommt, welcher die Rückkehr der Antriebswelle (12) aus der Eingriffsposition verhindert;
- der Verschlussdorn (52), welcher nunmehr die Drehbewegung der Antriebswselle (12) mitmacht, durch weiter verstärkten manuellen Druck auf das Betätigungselement (30) in den Öffnungsbereich verschoben wird, wobei die von der zweiten Rückstellfeder (54) bewirkte Gegenkraft eine axiale, der Drehung überlagerte Schlagbewegung der Antriebswelle (12) aktiviert, wobei ferner das Verschlusselement (53) die Austrittsöffnung (58) in einem variablen, durch Änderung des manuellen Drucks auf das Betätigungselement (30) kontrollierbaren Ausmasse freigibt, sodass das durch die Dreh- und Schlagbewegung gelockerte Dosiergut durch die Austrittsöffnung (58) ausgetragen wird;
- die Austrittsöffnung (58) bei Verminderung des Daumendruckes auf das Betätigungselement (30) geschlossen wird, und dass bei völliger Wegnahme des Daumendrucks der Motor (21) abschaltet, wobei jedoch die Antriebswelle (12) in Eingriffsposition bleibt;
- zum Entfernen und Auswechseln der Dosiereinheit (50) das mindestens ein Entriegelungselement (46) betätigt und damit die Verriegelung in der Eingriffsposition gelöst wird, sodass die Antriebswelle (12) und das Betätigungselement (30) durch die erste Rückstellfeder (16) in die Ausgangsposition zurückgebracht werden und die Dosiereinheit (50) aus der Haltevorrichtung (10) ausgeklinkt werden kann.

## Claims

1. Dosage-dispensing instrument (1) for the dispensing of powderous and of pasteous substances, comprising at least one dispensing unit (50) which has a vertically movable shutter bolt (52) with a shutter element (53) as well as a discharge orifice (58) which can be closed by the shutter element (53), **characterized in that** the dosage-dispensing instrument (1) comprises a control unit (40) that is configured as a grip handle with an elongated body (41) and further comprises a holder device (10), and that the at least one dispensing unit (50) can be installed in the holder device (10) as well as removed from the latter, and that the control unit (40) comprises at least one actuator (20) whose action is directed at an installed dispensing unit (50), with a motor (21) and a transmission (22), a manually operable actuator element (30), as well as a drive shaft (12) which in the operating position of the instrument has an essentially vertical orientation and which can be driven by the motor (21) by way of the transmission (22), wherein the drive shaft (12) has a first end (13) facing towards the actuator element (30) and a second end (14) facing towards the shutter bolt (52) of the installed dispensing unit (50), wherein through manually controlled movement of the actuator element (30) the drive shaft (12) can be moved in an axial direction from a home position into an engaged position where the second end (14) is mechanically engaged with the shutter bolt (52), and wherein through further manually controlled movement of the actuator element (30) past the point of engagement the shutter bolt (52) can be brought into an opening range where the shutter element (53) opens up the discharge orifice (58) to a variable, position-dependent extent, wherein the drive shaft (12) and the actuator element (30) are arranged, in relation to the operating position of the dosage-dispensing instrument (1), in a laterally projecting part (45) of the body (41), and that the body (41) contains a hollow space (42) in which at least major portions of the motor (21) and the transmission (22) are enclosed.

2. Dosage-dispensing instrument (1) according to claim 1, **characterized in that** the motor (21) and the rotary movement of the drive shaft (12), which is generated by the motor (21) by way of the transmission (22), can be switched on through manual action directed at the actuator element (30) and switched off by removing said manual action.

3. Dosage-dispensing instrument (1) according to claim 1 or 2, **characterized in that** the motor (21), the transmission (22) and the drive shaft (12) are arranged together in an actuator unit which is supported in the body (21) with vertical mobility relative to the operating position of the instrument, said actuator unit being connected to the actuator element (30) and movable by a manual force directed at the latter.

4. Dosage-dispensing instrument (1) according to one of the claims 1 to 3, **characterized in that** the transmission (22) of the actuator unit (20) preferably comprises a spur gear arrangement, wherein the axes of rotation of the gears (23) have a substantially vertical orientation relative to the operating position of the dosage-dispensing instrument (1).

5. Dosage-dispensing instrument (1) according to one of the claims 1 to 4, **characterized in that** the substantially vertical displacement of the actuator unit (20), relative to the operating position of the instrument (1), from the home position to the engagement position and further into the opening range takes place against the resistance of a first return spring (16) which is braced against the body (41) and which in response to a decrease of the manual force on the actuator element (30) pushes the actuator unit back (20) towards the home position.

6. Dosage-dispensing instrument (1) according to claim 5, **characterized in that** when the shutter bolt (52) is engaged by the drive shaft (12) and moves from the engagement position into the opening range, the vertical displacement of the shutter bolt (52) relative to the operating position takes place against the resistance of a second return spring (54) which is braced against the dispensing unit (50) and which pushes the shutter bolt axially upwards against the drive shaft (12).

7. Dosage-dispensing instrument (1) according to one of the claims 1 to 6, **characterized in that** the actuator unit (20) comprises a retainer element (26) which, upon reaching the engagement position, snaps into a locking element (27) which is arranged in the body (41) so that a return of the actuator unit (20) towards the home position is blocked, but continued travel into the opening range is not impeded.

8. Dosage-dispensing instrument (1) according to claim 7, **characterized in that** for the release of the locking element (27), at least one unlocking element (46) which can be operated at the push of a finger is arranged on the outside of the body (41).

9. Dosage-dispensing instrument (1) according to one of the preceding claims, **characterized in that** the shutter bolt (52) can be set into rotation by the engagement of the drive shaft (12) which is driven by the motor (21)by way of the transmission (22).

10. Dosage-dispensing instrument (1) according to one of the preceding claims, **characterized in that** the actuator unit (20) further comprises a knocking device (24), whereby a short-stroke, axially directed knocking movement can be superimposed on the rotation of the drive shaft (12) and of the shutter bolt (52), when the latter is engaged with the drive shaft (12).

11. Dosage-dispensing instrument (1) according to claim 10, **characterized in that** the axially directed knocking movement of the drive shaft (12) can be generated byway of an axially directed motion-transmitting connection between the drive shaft (12) and the knocking device (24), said connection being established by the axially directed opposing force of the shutter bolt (52) under the biasing tension of the second return spring (54), and that in the absence of the opposing force of the shutter bolt (52) the axially directed knocking movement of the drive shaft (12) can be deactivated.

12. Dosage-dispensing instrument (1) according to one of the preceding claims, **characterized in that** a read/write device (47) is arranged in the body (41), whereby data stored on an identification means (11) that is arranged on the dispensing unit (50) can be transferred to the read/write device (47).

13. Dosage-dispensing instrument (1) according to one of the preceding claims, **characterized in that** a nose-like projection (43) is formed at the - relative to the operating position - upper end of the grip handle shell (44), wherein in the operating state of the dosage-dispensing instrument (1), the projection (43) rests on the hand grasping the body (41) of the control unit (40), assuring a secure grip on the dosage-dispensing instrument (1).

14. Dosage-dispensing instrument (1) according to one of the preceding claims, **characterized in that** the control unit (40) comprises a power-supply source (25) to supply power to the motor (21), wherein said power-supply source (25) is arranged on the body (41) at a location above the motor (21) and can be removed and replaced without the use of a tool.

15. Method for the dispensing of powderous dosage material with a dosage-dispensing instrument (1) according to one of the claims 1 to 14, **characterized in that**
• a dispensing unit (50) containing the dosage material is set into the holder device (10) of the control unit (40) and secured in the holder device by a self-locking latch;
• the dosage-dispensing instrument (1), in vertical orientation with the discharge orifice (58) facing downward, is held over a target vessel;
• thumb pressure is applied to the actuator element (30) with the immediate result that the contact switch (28) is closed, whereby the rotary movement of the drive shaft (12) is started;
• through continued and increased thumb pressure on the actuator element (30), the drive shaft (12) is moved into the engagement position where the second end (14) of the drive shaft (12), due to the already running rotary movement of the latter, automatically finds its engagement with the shutter bolt (52), and simultaneously, at the point of full engagement, a latch mechanism (26, 27) locks up, whereby the retraction of the drive shaft (12) from the engaged position is prevented;
• through continued and further increased thumb pressure on the actuator element (30) the shutter bolt (52), which now participates in the rotary movement of the drive shaft (12), is moved into the opening range whereby, as a result of the opposing force that is caused by the second return spring (54), a vertical knocking movement of the drive shaft (12) is activated which is superimposed on the rotation, while the shutter element (53) opens up the discharge orifice (58) to a variable degree of aperture which is controllable by thumb pressure on the actuator element (30), so that the dosage material that has been loosened by the rotary and knocking movements is dispensed through the discharge orifice (58).
• when the thumb pressure on the actuator element (30) is reduced, the discharge opening (58) is closed, and if the thumb pressure is taken off entirely, the motor (21) is switched off while the drive shaft (12) remains in the engaged position;
• in order to remove and exchange the dispensing unit (50), the lock on the engagement position is released by actuating the at least one unlocking element (46), so that the first return spring (16) can push the drive shaft (12) and the actuator element (30) back into the home position and the dispensing unit (50) can be unlatched from the holder device.

## Revendications

1. Appareil de dosage (1) pour le dosage de substances sous forme de poudre ou de pâte, comprenant au moins une unité de dosage (50) comprenant un mandrin de fermeture (52) avec un élément de fermeture (53) ainsi qu'une ouverture de sortie (58) susceptible d'être fermée par l'élément de fermeture (53), **caractérisé en ce que** l'appareil de dosage (1) comprend une unité d'entraînement (40) conçue comme une poignée avec un corps de base allongé (41) et un dispositif de maintien (10), et, dans le dispositif de maintien (10), l'au moins une unité de dosage (50) peut être insérée dans le dispositif de maintien (10) ou retirée hors de celui-ci, et l'unité d'entraînement (40) comporte au moins un actionneur (20) avec un moteur d'entraînement (21) et un engrenage (22) agissant sur une unité de dosage (50) insérée, un élément de commande manuel (30) ainsi qu'un arbre d'entraînement (12) orienté essentiellement verticalement dans une position de fonctionnement et susceptible d'être entraîné en rotation par le moteur (21) par le biais de l'engrenage (22), avec une première extrémité (13) tournée vers l'élément de commande (30) et une deuxième extrémité (14) tournée vers le mandrin de fermeture (52) de l'unité de dosage (50) insérée, un mouvement manuel de l'élément de commande (30) permettant de déplacer l'arbre d'entraînement (12) axialement d'une position de départ vers une position d'engagement, dans laquelle la deuxième extrémité (14) est en prise avec le mandrin de fermeture (52), et le mandrin de fermeture (52) pouvant être transféré dans une région d'ouverture après la mise en prise par un nouveau mouvement manuel de l'élément de commande (30), dans laquelle l'élément de fermeture (53) dégage l'ouverture de sortie (58) selon un degré variable en fonction de la position, l'arbre d'entraînement (12) et l'élément de commande (30) étant agencés dans une partie (45) du corps de base (41) faisant saillie latéralement dans la position de fonctionnement de l'appareil de dosage (1), et **en ce que** le corps de base (41) comporte un espace creux (42) dans lequel le moteur (21) et l'engrenage (22) sont agencés au moins en majeure partie.

2. Appareil de dosage (1) selon la revendication 1, **caractérisé en ce que** le moteur (21) et le mouvement de rotation de l'arbre d'entraînement (12) produit par le biais de l'engrenage (22) peut être commuté par une intervention manuelle sur l'élément de commande (30) et arrêté par la suppression de l'intervention manuelle.

3. Appareil de dosage (1) selon la revendication 1 ou 2, **caractérisé en ce que** le moteur (21), l'engrenage (22) et l'arbre d'entraînement (12) sont réunis dans une unité d'actionneur montée de façon verticalement coulissante dans la position de fonctionnement dans le corps de base (41), reliée à l'élément de commande (30) et déplaçable par une intervention manuelle sur celle-ci.

4. Appareil de dosage (1) selon l'une des revendications 1 à 3, **caractérisé en ce que** l'engrenage (22) de l'unité d'actionneur (20) est de préférence un engrenage à roue dentée frontale, les axes de rotation des roues dentées (23) étant orientés quasiment verticalement dans la position de fonctionnement de l'appareil de dosage (1).

5. Appareil de dosage (1) selon l'une des revendications 1 à 4, **caractérisé en ce que** le déplacement vertical de l'unité d'actionneur (20) dans la position de fonctionnement est effectué de la position de départ vers la position d'engagement et également, et plus loin dans la région d'ouverture, contre la résistance d'un premier ressort de rappel (16) prenant appui sur le corps de base (41), et faisant revenir l'unité d'actionneur (20) contre la position de départ après le relâchement de l'intervention manuelle sur l'élément de commande (30).

6. Appareil de dosage (1) selon la revendication 5, **caractérisé en ce que** le déplacement vertical dans la position de fonctionnement du mandrin de fermeture (52) en prise avec l'arbre d'entraînement (12), est effectué de la position d'engagement vers la région d'ouverture contre la résistance d'un deuxième ressort de rappel (54) prenant appui sur l'unité de dosage (50), et poussant le mandrin de fermeture (52) axialement vers le haut contre l'arbre d'entraînement (12).

7. Appareil de dosage (1) selon l'une des revendications 1 à 6, **caractérisé en ce que** l'unité d'actionneur (20) comprend un élément de retenue (26), lequel s'encliquète dans un élément de verrouillage (27) agencé dans le corps de base (41), en atteignant la position d'engagement, empêchant ainsi un mouvement retour de l'unité d'actionneur (20) dans la direction de la position de départ, tout en permettant néanmoins la poursuite du mouvement vers la région d'ouverture.

8. Appareil de dosage (1) selon la revendication 7, **caractérisé en ce qu'**il est prévu au moins un élément de déverrouillage (46) commandé par une pression du doigt sur le côté extérieur du corps de base (41), pour la libération de l'élément de verrouillage (27).

9. Appareil de dosage (1) selon l'une des revendications précédentes, **caractérisé en ce que** l'engagement de l'arbre d'entraînement (12) entraîné par le moteur (21) par le biais de l'engrenage (22) permet de mettre le mandrin de fermeture (52) en rotation.

10. Appareil de dosage (1) selon l'une des revendications précédentes, **caractérisé en ce que** l'unité d'actionneur (20) comprend un dispositif de percussion (24), à l'aide duquel un mouvement de percussion axial à course courte peut être superposé à la rotation de l'arbre d'entraînement (12) et du mandrin de fermeture (52) en prise avec celui-ci.

11. Appareil de dosage (1) selon la revendication 10, **caractérisé en ce que** le mouvement de percussion axial de l'arbre d'entraînement (12) peut être produit du fait que l'arbre d'entraînement (12) peut être relié fonctionnellement au dispositif de percussion (24) sous l'action d'une force de contre-pression du mandrin de fermeture (52) précontraint par le deuxième ressort de rappel (54), et **en ce qu'**en l'absence de la force de contre-pression du mandrin de fermeture (52), le mouvement de percussion axial de l'arbre d'entraînement (12) peut être arrêté.

12. Appareil de dosage (1) selon l'une des revendications précédentes, **caractérisé en ce qu'**un dispositif de lecture/écriture (47) est agencé dans le corps de base (41), avec lequel des données enregistrées sur un moyen d'identification (11) agencé sur l'unité de dosage (50) peuvent être transmises au dispositif de lecture/écriture (47).

13. Appareil de dosage (1) selon l'une des revendications précédentes, **caractérisé en ce qu'**une saillie du genre nez (43) est formée à l'extrémité supérieure de la cuvette de poignée (44) dans la position de fonctionnement, laquelle repose sur la main entourant le corps de base (41) pendant le fonctionnement et garantit ainsi un maintien fiable de l'appareil de dosage portatif (1).

14. Appareil de dosage (1) selon l'une des revendications précédentes, **caractérisé en ce que** l'unité d'entraînement (40) comprend un élément d'alimentation en énergie (25) pour alimenter le moteur (21) en énergie, lequel est agencé au-dessus du moteur sur le corps de base (41) et peut être ôté et remplacé sans nécessiter d'outil.

15. Procédé pour le dosage de produits à doser sous forme de poudres, avec un appareil de dosage (1) selon l'une des revendications 1 à 14, **caractérisé en ce que**
- une unité de dosage (50) contenant le produit à doser est insérée dans le dispositif de maintien (10) de l'unité d'entraînement (40), et sécurisée par un encliquetage automatique dans le dispositif de maintien (10) ;
- l'appareil de dosage (1) est maintenu dans une orientation verticale avec l'ouverture de sortie (58) vers le bas au-dessus d'un récipient cible ;
- une intervention manuelle sur l'élément de commande (30) permet tout d'abord de fermer le commutateur à contact (28) et de démarrer ainsi le mouvement de rotation de l'arbre d'entraînement (12) ;
- une nouvelle pression renforcée du pouce sur l'élément de commande (30) permet de mettre l'arbre d'entraînement (12) dans la position d'engagement, la deuxième extrémité (14) de l'arbre d'entraînement (12) en rotation venant automatiquement se mettre en prise dans le mandrin de fermeture (52), et un mécanisme d'encliquetage (26, 27) devenant opérationnel simultanément lorsque la position d'engagement est complètement atteinte, pour empêcher l'arbre d'entraînement (12) de ressortir de la position d'engagement ;
- le mandrin de fermeture (52), à présent solidaire en rotation avec l'arbre d'entraînement (12), est déplacé vers la région d'ouverture par une pression manuelle renforcée supplémentaire sur l'élément de commande (30), la contre-force provoquée par le deuxième ressort de rappel (54) déclenchant un mouvement de percussion axial de l'arbre d'entraînement (12) superposé à la rotation, l'élément de fermeture (53) dégageant l'ouverture de sortie (58) selon un degré variable, contrôlable par une modification de la pression manuelle sur l'élément de commande (30), de sorte que le produit à doser débloqué est évacué par l'ouverture de sortie (58) par le mouvement de rotation et de percussion ;
- l'ouverture de sortie (58) est fermée en réduisant la pression du pouce sur l'élément de commande (30), et le relâchement complet de la pression du pouce provoquant l'arrêt du moteur (21), l'arbre d'entraînement (12) restant néanmoins dans la position d'engagement ;
- pour le retrait et le remplacement de l'unité de dosage (50), l'au moins un élément de déverrouillage (46) est actionné et le verrouillage dans la position d'engagement est ainsi débloqué, de sorte que l'arbre d'entraînement (12) et l'élément de commande (30) sont renvoyés dans la position de départ par le premier ressort de rappel (16), et l'unité de dosage (50) peut être désencliquetée du dispositif de maintien (10).
